# EUROPEAN PATENT SPECIFICATION

(11) **EP 3 944 145 B1**
(45) Date of publication and mention of the grant of the patent: **20.03.2024**
(21) Application number: 21210713.0
(22) Date of filing: 26.11.2021
(51) Int. Cl.: G06N 3/084

(54) **METHOD AND DEVICE FOR TRAINING IMAGE RECOGNITION MODEL, EQUIPMENT AND MEDIUM**
METHODE UND GERÄT ZUM TRAINIEREN EINES BILDERKENNUNGSMODELLS, AUSRÜSTUNG UND MEDIUM
PROCEDE ET DISPOSITIF D'ENTRAINEMENT DE MODELE DE RECONNAISSANCE D'IMAGES, EQUIPEMENT ET SUPPORT

(30) Priority: 22.01.2021 CN 202110090986
(43) Date of publication of application: 26.01.2022
(73) Proprietor: BEIJING BAIDU NETCOM SCIENCE TECHNOLOGY CO., LTD., Beijing 100085 (CN)
(72) Inventor: LIU, Ruixue, BEIJING, 100085 (CN); QIN, Xiameng, BEIJING, 100085 (CN); EN, Mengyi, BEIJING, 100085 (CN); YAO, Kun, BEIJING, 100085 (CN); ZHANG, Chengquan, BEIJING, 100085 (CN); ZHU, Shengxian, BEIJING, 100085 (CN); LI, Yunhao, BEIJING, 100085 (CN); HAN, Junyu, BEIJING, 100085 (CN); SUN, Hao, BEIJING, 100085 (CN)
(74) Representative: von Tietzen und Hennig, Nikolaus

(56) References cited:
- US-A1- 2020 026 944
- US-B1- 10 489 682
- YANG ZHAO ET AL: "Self-Adversarially Learned Bayesian Sampling", ARXIV.ORG, CORNELL UNIVERSITY LIBRARY, 201 OLIN LIBRARY CORNELL UNIVERSITY ITHACA, NY 14853, 21 November 2018 (2018-11-21), XP080937686,

## Description

### TECHNICAL FIELD

The present disclosure relates to the technical field of artificial intelligence, more particularly, to the technical fields of computer vision, deep learning and imaging processing, and in particular to a method and device for training an image recognition model, electronic equipment, a computer readable storage medium and a computer program product.

### BACKGROUND

Optical character recognition (OCR) refers to a process that electronic equipment checks characters printed on paper, determines their shapes by detecting dark and bright patterns and then translates the shapes into computer characters by a character recognition method.

With the development of deep learning, some existing OCR methods for classification and recognition are replaced by various deep neural networks. The training of the deep learning network models needs the support of a large number of data; however, for some scenes with private data, it is difficult to acquire a large amount of training data, resulting in low efficiency of optical character recognition.

US 10 489 682 B1 discloses an optical character recognition system employs a deep learning system that is trained to process a plurality of images within a particular domain to identify images representing text within each image and to convert the images representing text to textually encoded data. The deep learning system is trained with training data generated from a corpus of real-life text segments that are generated by a plurality of OCR modules. Synthetically generated text segments are produced by programmatically converting text strings to a corresponding image where each text string and corresponding image form a synthetic image/text tuple.

### SUMMARY

The present disclosure provides a method and device for training an image recognition model, an image recognition method and device, electronic equipment and a medium.

According to one aspect of the present disclosure, a method for training an image recognition model is provided. The method for training the image recognition model includes: acquiring training data, wherein the training data includes training images for a preset vertical type, and the training images include a first training image containing real data of the preset vertical type and a second training image containing virtual data of the preset vertical type, wherein the preset vertical type comprises one or more of a financial type, a card type and a bill type; building a basic model, wherein the basic model includes a deep learning network, and the deep learning network is configured to extract text data from the training images by performing image recognition; training the basic model into the image recognition model by using the training data; acquiring a newly received image for the preset vertical type, wherein the newly received image for the preset vertical type comprises: a first image containing real data of the preset vertical type, and the first image and the first training image has different formats, wherein the formats comprise positions of the fields; generating a second image containing virtual data of the preset vertical type based on the first image, wherein the second image and the first image have a same format; adding the first image and the second image into the training data; and updating the image recognition model based on the training data to which the first image and the second image are added.

According to another aspect of the present disclosure, an image recognition method is provided. The image recognition method includes: acquiring a target image to be recognized; and recognizing the target image based on the image recognition model according to the one aspect of the present disclosure so as to extract text data in the target image.

According to another aspect of the present disclosure, a device for training an image recognition model is provided. The device for training the image recognition model includes: an acquisition unit, configured to acquire training data, wherein the training data includes training images for a preset vertical type, and the training images include a first training image containing real data of the preset vertical type and a second training image containing virtual data of the preset vertical type wherein the preset vertical type comprises one or more of a financial type, a card type and a bill type; a building unit, configured to build a basic model, wherein the basic model includes a deep learning network, and the deep learning network is configured to extract text data from the training image by performing image recognition; and a training unit, configured to train the basic model into the image recognition model by using the training data; a unit for acquiring a newly received image for the preset vertical type, wherein the newly received image for the preset vertical type comprises: a first image containing real data of the preset vertical type, and the first image and the first training image has different formats, wherein the formats comprise positions of fields; a unit for generating a second image containing virtual data of the preset vertical type based on the first image, wherein the second image and the first image have a same format; a unit for adding the first image and the second image into the training data; and a unit for updating the image recognition model based on the training data to which the first image and the second image are added.

The beneficial technical effects brought by the technical solutions provided by the embodiments of the present disclosure at least include: the training efficiency and the recognition accuracy of the image recognition model may be improved by using the first training image containing the real data and the second training image containing the virtual data simultaneously in the training process.

It should be understood that the content described in this section is not intended to identify key or important features of the embodiments of the present disclosure, nor is it intended to limit the scope of the present disclosure. Other features of the present disclosure will be easily understood through the following description.

### BRIEF DESCRIPTION OF THE DRAWINGS

The accompanying drawings illustrate the embodiments by way of example and constitute a part of the description, and are used to explain the example implementation manners of the embodiments together with the text description of the description. The illustrated embodiments are only for illustration and do not limit the scope of the claims. In all the accompanying drawings, the same reference numerals refer to similar but not necessarily identical elements.
FIG. 1 shows a schematic diagram of a system in which various methods described herein may be implemented according to an embodiment of the present disclosure;
FIG. 2 shows a flowchart of a method for training an image recognition model according to an embodiment of the present disclosure;
FIG. 3A shows a schematic diagram of a financial type of image according to an embodiment of the present disclosure;
FIG. 3B is a schematic diagram of a card type of image according to an embodiment of the present disclosure;
FIG. 3C shows a schematic diagram of a bill type of image according to an embodiment of the present disclosure;
FIG. 4 shows a flowchart of an image recognition method according to an embodiment of the present disclosure;
FIG. 5 shows a schematic diagram of an exemplary recognition result according to an embodiment of the present disclosure;
FIG. 6 shows a schematic diagram of an exemplary training platform according to an embodiment of the present disclosure;
FIG. 7 shows a schematic block diagram of a device for training an image recognition model according to an embodiment of the present disclosure;
FIG. 8 shows a schematic block diagram of an image recognition device according to an embodiment of the present disclosure; and
FIG. 9 shows a structural block diagram of exemplary electronic equipment that can be used to implement an embodiment of the present disclosure.

### DETAILED DESCRIPTION

The example embodiments of the present disclosure are described below in conjunction with the accompanying drawings, including various details of the embodiments of the present disclosure for facilitating understanding, and should be regarded as merely the way of example. Therefore, those of ordinary skill in the art should realize that various changes and modifications may be made to the embodiments described herein without departing from the scope of the present disclosure. Similarly, for clarity and conciseness, descriptions of well-known functions and structures are omitted in the following description.

In the present disclosure, unless otherwise specified, the terms "first", "second" and the like are used to describe various elements and are not intended to limit the position relationship, the timing relationship or the importance relationship of the elements. Such terms are only for distinguishing one element from another element. In some examples, the first element and the second element may point to the same example of the element; and in some cases, based on the description of the context, the first element and the second element may also refer to different examples.

The terms used in the description of various examples in the present disclosure are only for describing specific examples and are not intended to perform limitation. Unless the context clearly indicates otherwise, if the number of the elements is not specifically limited, there may be one or more elements. In addition, the term "and/or" used in the present disclosure covers any one and all possible combinations of the listed items.

Optical character recognition (OCR) is a process of recognizing characters in an image as computer readable characters. OCR has wide application scenes since its development. For example, example application of OCR includes network picture character recognition, card recognition (for example, identity card, bank card and business card recognition), bill recognition (for example, value added tax invoice, travel itinerary, train ticket and taxi ticket recognition), license plate recognition and the like.

With the development of deep learning, some existing OCR methods are replaced by various deep neural networks. The deep learning algorithm may autonomously extract features, learn and achieve better recognition effects. However, the training of the deep learning network model needs the support of a large amount of data. For some application scenes, for example, a financial type (a bank check/ customer advice), a card type (an identity card, a vehicle license and a driving license), a bill type (a value added tax invoice and a guarantee slip) and the like, the data is highly private, so it is difficult to collect enough data for training. Moreover, annotation of a large amount of data takes a lot of time and expense. Therefore, the present disclosure provides a method for training an image recognition model. A large amount of virtual data is generated according to a small amount of real data, and the real data and the large amount of generated virtual data are used simultaneously in the process of training the image recognition model, thereby improving the training efficiency and the recognition accuracy of the image recognition model.

The embodiments of the present disclosure are described below in detail with reference to the accompanying drawings.

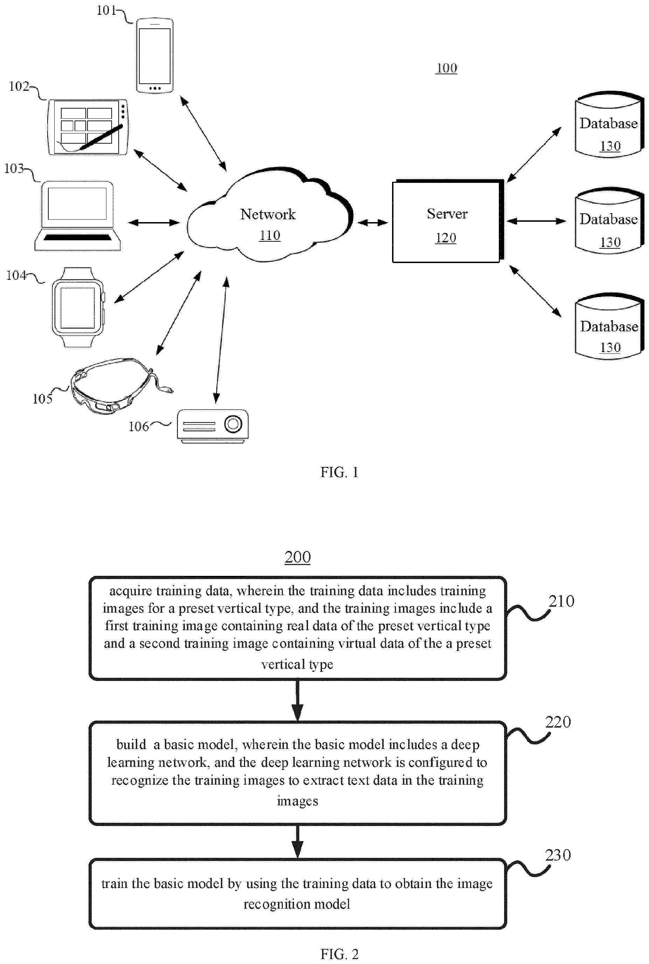

FIG. 1 shows a schematic diagram of an exemplary system 100 in which various methods and devices described herein may be implemented according to an embodiment of the present disclosure. Referring to FIG. 1, the system 100 includes one or more client equipment 101, 102, 103, 104, 105 and 106, a server 120 and one or more communication networks 110 which couple the one or more client equipment to the server 120. The client equipment 101, 102, 103, 104, 105 and 106 may be configured to execute one or more application programs.

In the embodiments of the present disclosure, the server 120 may run one or more services or software applications that enable execution of the methods of the present disclosure.

In some embodiments, the server 120 may also provide other services or software applications which may include a non-virtual environment and a virtual environment. In some embodiments, these services may be provided as web-based services or cloud services, for example, provided to users of the client equipment 101, 102, 103, 104, 105 and/or 106 under the software as a service (SaaS) model.

In the configuration shown in FIG. 1, the server 120 may include one or more components for implementing functions performed by the server 120. These components may include a software component, a hardware component or a combination thereof, executable by one or more processor. Users who operate the client equipment 101, 102, 103, 104, 105 and/or 106 may sequentially utilize one or more client application programs to interact with the server 120 so as to utilize the services provided by these components. It should be understood that various different system configurations are possible, which may be different from the system 100. Therefore, FIG. 1 is an example of a system for implementing various methods described herein, and is not intended to limit.

The users may use the client equipment 101, 102, 103, 104, 105 and/or 106 to interact with the image recognition model. The client equipment may provide an interface which enables the users of the client equipment to interact with the client equipment. The client equipment may also output information to the users through the interface. Although FIG. 1 only describes six client equipment, those skilled in the art can understand that the present disclosure may support any number of client equipment.

The client equipment 101, 102, 103, 104, 105 and/or 106 may include various types of computer equipment, for example: portable handheld equipment, a general-purpose computer (such as a personal computer and a laptop computer), a workstation computer, wearable equipment, a game system, a thin client, various message transceiving equipment, a sensor and other sensing equipment. These computer equipments may run various types and versions of software application programs and operating systems, for example, MICROSOFT Windows, APPLE iOS, an UNIX-like operating system, and a Linux or Linux-like operating system (such as GOOGLE Chrome OS), or include various mobile operating systems, for example, MICROSOFT Windows Mobile OS, iOS, Windows Phone and Android. The portable handheld equipment may include a cell phone, a smart phone, a tablet computer, a personal digital assistant (PDA) and the like. The wearable equipment may include a head-mounted display and other equipment. The game system may include various handheld game equipment, game equipment supporting Internet and the like. The client equipment can execute various different application programs, for example, various Internet-related application programs, communication application programs (such as E-mail application programs) and short message service (SMS) application programs, and may use various communication protocols.

The network 110 may be any type of network well known to those skilled in the art, and may use any one of various available protocols (including but not limited to TCP/IP, SNA, IPX and the like) to support data communication. Only as an example, one or more networks 110 may be a local area network (LAN), an Ethernet-based network, a token ring, a wide area network (WAN), the Internet, a virtual network, a virtual private network (VPN), an internal network, an external network, a public switched telephone network (PSTN), an infrared network, a wireless network (such as Bluetooth, WIFI) and/or any combination of these networks and/or other networks.

The server 120 may include one or more general-purpose computers, dedicated server computers (for example, personal computer (PC) servers, UNIX servers, middle-end servers), blade servers, mainframe computers, server clusters or any other appropriate arrangement and/or combination. The server 120 may include one or more virtual machines running a virtual operating system, or other computing architectures involving virtualization (for example, one or more flexible pools which may be virtualized to maintain logical storage equipment of virtual storage equipment of the server). In various embodiments, the server 120 may run one or more services or software applications which provide the functions described below.

A computing unit in the server 120 may run one or more operating systems including any of the above operating systems and any commercially available server operating systems. The server 120 may also run any one of various additional server application programs and/or intermediate layer application programs, including an HTTP server, an FTP server, a CGI server, a JAVA server, a database server and the like.

In some embodiments, the server 120 may include one or more application programs to analyze and combine data feed and/or event update received from the users of the client equipment 101, 102, 103, 104, 105 and 106. The server 120 may further include one or more application programs to display data feed and/or real-time events by one or more display equipment of the client equipment 101, 102, 103, 104, 105 and 106.

In some embodiments, the server 120 may be server of a distributed system, or a server combined with a blockchain. The server 120 may also be a cloud server, or an intelligent cloud computing server or an intelligent cloud host with an artificial intelligence technology. The cloud server is a host product in a cloud computing service system so as to overcome the defects of high management difficulty and weak business scalability in the traditional physical host and virtual private server (VPS) service.

The system 100 may further include one or more databases 130. In some embodiments, these databases may be used to store data and other information. For example, one or more of the databases 130 may be used to store information such as audio files and video files. The data repository 130 may reside in various positions. For example, the data repository used by the server 120 may be local to the server 120, or may be remote from the server 120 and may be in communication with the server 120 through a network-based or dedicated connection. The data repository 130 may be of different types. In some embodiments, the data repository used by the server 120 may be a database, for example, a relational database. One or more of these databases may store, update and retrieve data to the databases and from the databases in response to commands.

In some embodiments, one or more of the databases 130 may also be used by an application program to store application program data. The database used by the application program may be different types of databases, for example, a key value repository, an object repository or a conventional repository supported by a file system.

The system 100 of FIG. 1 may be configured and operated in various ways, so that various methods and devices described according to the present disclosure can be applied.

FIG. 2 shows a flowchart of a method 200 for training an image recognition model according to an embodiment of the present disclosure. The method 200 may be performed at client equipment (for example, any one of the client equipment 101 to 106 shown in FIG. 1), that is, a performing subject of each step of the method 200 may be any one of the client equipment 101 to 106 shown in FIG. 1. In some embodiments, the method 200 may be performed at a server (for example, the server 120 shown in FIG. 1). In some embodiments, the method 200 may be performed by a combination of client equipment (for example, any one of the client equipment 101 to 106) and a server (for example, the server 120). Hereinafter, by taking a case where the performing subject is the server 120 as an example, each step of the method 200 is described in detail.

As shown in FIG. 2, the method 200 for training the image recognition model may include a step 210 to a step 230. In the step 210, acquire training data, wherein the training data includes training images for a preset vertical type. For example, the training images may include: a first training image containing real data of the preset vertical type and a second training image containing virtual data of the preset vertical type. In the step 220, build a basic model. For example, the basic model includes a deep learning network, wherein the deep learning network is configured to recognize the training images to extract text data in the training image. In the step 230, train the basic model by using the training data to obtain the image recognition model. Therefore, the training efficiency and the recognition accuracy of the image recognition model may be improved by using the first training image containing the real data and the second training image containing the virtual data simultaneously in the training process.

In an example, the training image for training may be an image acquired by an image sensor (for example, may be a webcam, a camera and the like), wherein the image may be a color image or a grayscale image. In other examples, the image may also be a static image or a video image, which is not limited by the present disclosure. In addition, the image may be stored (for example, buffered) in storage equipment or a storage medium after being acquired by the image sensor.

In an example, during training, the size of the training image may be specified in advance, for example, long sides of the training image may be preset as 512, 768 and 1024.

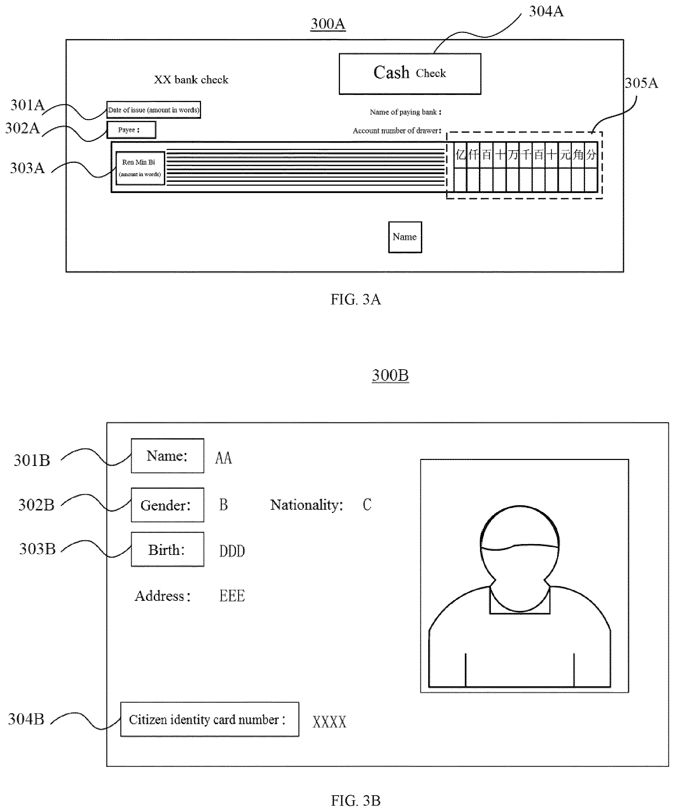

In an example, the preset vertical type may include any one of a financial type, a card type and a bill type. For the image recognition model for the financial type, the training image may be a financial type of image, for example, a bank check image, a bank customer advice image and the like. The bank check image or the bank customer advice image may be an image shot by an image sensor or scanned by other sensors (such as a printer). For example, as shown in FIG. 3A, it shows a schematic diagram of a financial type of image 300A according to an embodiment of the present disclosure. The image 300A is a cash check image of XX bank, which includes information such as the date of issue, payee, check amount and the like of the cash check issued by the XX bank. The words in the 305A are monetary units. Specifically, the " 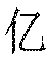 " means hundred-million, the " 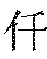 " means ten-million, the first " 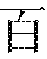 " on the left means million, the first " 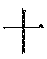 " on the left means hundred-thousand, the " 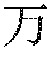 " means ten-thousand, the " 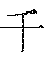 " means thousand, the second " 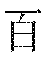 " on the left means hundred, the second " 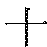 " on the left means ten, the " 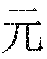 " means yuan, the " 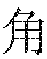 " means one ten-cent, and the " 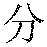 " means cent.

In an example, for the image recognition model for the card type, the training image may be a card type of image, for example, an identity card image, a vehicle license image, a driving license image and the like. The identity card image, the vehicle license image or the driving license image may be an image shot by an image sensor or scanned by other sensors (such as a printer). For example, as shown in FIG. 3B, it shows a schematic diagram of a card type of image 300B according to an embodiment of the present disclosure. The image 300B is an identity card image, including information such as the name, identity card number and the like of the user of the identity card.

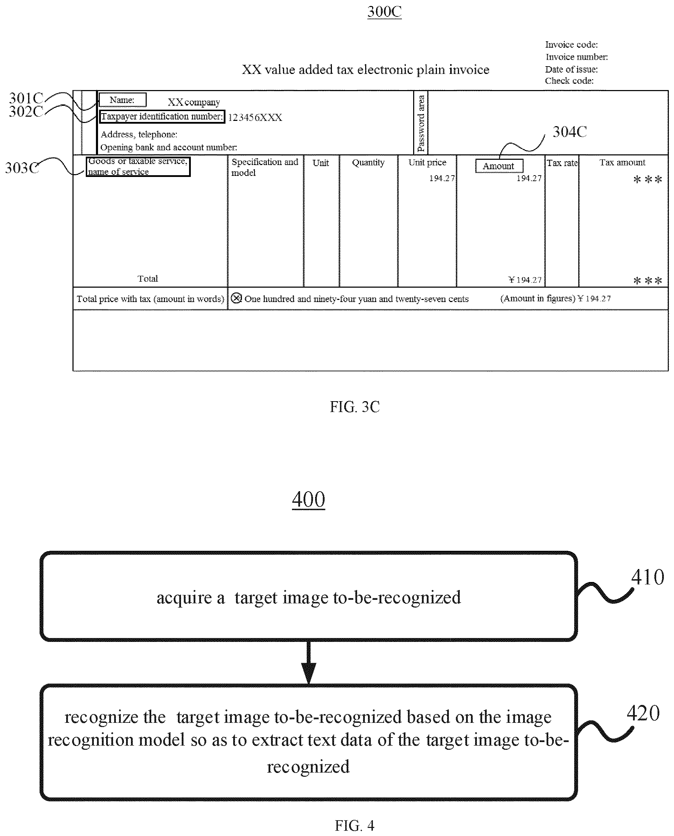

In an example, for the image recognition model for the bill type, the training image may be a bill type of image, for example, a value added tax invoice image, a guarantee slip image, a train ticket image, a bus ticket image and the like. The value added tax invoice image or the guarantee slip image may be an image shot by an image sensor or scanned by other sensors (such as a printer). For example, as shown in FIG. 3C, it shows a schematic diagram of a bill type of image 300C according to an embodiment of the present disclosure. The image 300C is a value added tax invoice image, including information such as the name of a purchaser, taxpayer identification number, date of issue, check code, tax amount and the like.

In an example, the fields to be recognized in the first training image and the second training image for training may be annotated in advance. The fields to be recognized may be understood as fields to be recognized in the images. It may be understood that one image may include a plurality of fields to be recognized. The number of the fields to be recognized may be preset in advance as required, which is not limited by the present disclosure. For example, for the cash check image, the fields to be recognized may include one or more of the date of issue, payee, check amount, check type and the like. For example, for the identity card image, the fields to be recognized may include one or more of name, gender, date of birth, address, identity card number and the like. For another example, for the value added tax invoice image, the fields to be recognized may include one or more of name of a purchaser, taxpayer identification number, invoice type, invoice amount and the like. The fields to be recognized may be annotated by any annotating methods in related art. In an example, the fields to be recognized in the image may be framed and the type or field value of the fields may be annotated.

As shown in FIG. 3A, the fields to be recognized "date of issue", "payee", "Ren Min Bi" and "cash check" may be framed by using frames 301A-304A, and the type of each frame is annotated. For example, the type of the frame 301A may be annotated as date, and the type of the frame 303A may be annotated as check amount. As shown in FIG. 3B, the fields to be recognized "name", "gender", "birth" and "citizen identity card number" may be framed by using frames 301B-304B, and the type of each frame is annotated. For example, the type of the frame 301B may be annotated as name, and the type of the frame 304B may be annotated as number. As shown in FIG. 3C, the fields to be recognized "name", "taxpayer identification number", "goods or taxable service", "service name" and "amount" may be framed by using frames 301C-304C, and the type of each frame is annotated. For example, the type of the frame 303C may be annotated as "invoice type".

It may be understood that for financial type, card type and bill type related images, data is usually private and involves the privacy of users, so it is difficult to collect enough data for training. Therefore, when training the corresponding model of vertical type, the training image containing virtual data may be generated according to the acquired training image containing real data. For example, a large number (such as ten thousand level) of training images containing the virtual data may be generated on the basis of a small number of training images containing the real data.

In some examples, the second training image containing the virtual data may be generated on the basis of the first training image containing the real data of the preset vertical type. The second training image may be generated on the basis of the first training image through the following ways of: acquiring a first template image containing the real data of the preset vertical type; erasing field values of a plurality of fields to be recognized in the template image to obtain a second template image; and performing corpus filling on the erased field values of the plurality of fields to be recognized in the second template image to obtain a second training image containing the virtual data the preset vertical type.

In an example, for the identity card template image containing the real data, for example, the name is Mark, the gender is male, the birth is April 15, 1990, and the fields to be recognized are "name" and "birth". Then the field values "Mark" and "April 15, 1990" may be erased, and corpus filling is performed at the erased positions to obtain a large number of training images containing filled corpus. In some examples, during corpus filling, corresponding corpora may be selected from the corresponding corpus for filling.

In an example, when generating the second training image containing the virtual data on the basis of the first training image containing the real data, the number of the generated second training images may be preset, for example, 8000, 10000 and the like. The number may be set according to the actual training requirement, which is not limited by the present disclosure.

In some examples, the step that train the basic model by using the training data to obtain the image recognition model may include: input the training data into the basic model in batches according to a preset parameter; determine an error between text data in the training image extracted by a deep learning network and real text data corresponding to the training image according to an error function of the basic model; and perform back-propagation training on the deep learning network based on the error to obtain the image recognition model. In an example, the preset parameter may be a batch size, that is, the number of the training data used in the once training process. In some examples, the batch size may be related to the size of the training image.

In an example, training data may be input and a weight parameter of the deep learning network may be initialized, and the data is sequentially input into the model in batches for forward-propagation. Then, an error between text data predicted by the model and a real value identified in the training data may be calculated, an error gradient is subjected to back-propagation and the weight is updated. Finally, iteration is performed, so that the error gradient tends to zero. Optionally, the error function of the basic model may be an Euclidean distance between the predicted text data of the model and the real value. Therefore, through continuous iterative updating, the predicted output of the image recognition model may approach the real value, thereby improving the recognition efficiency and recognition accuracy.

In an example, the basic model for training m ay be an initial deep learning network without any training. In other examples, the basic model may also be an intermediate image recognition model generated in the process of training the basic model by using the training data. Therefore, the recognition efficiency can be improved and time can be saved.

In some examples, the method for training the image recognition model provided by the exemplary embodiment of the present disclosure may further include: acquire a newly received image aiming at a preset vertical type, wherein the newly received image aiming at the preset vertical type includes: a first image containing the preset vertical type of real data, and the first image and the first training image have a same format; add the first image into the training data; and update the image recognition model on the basis of the training data to which the first image is added.

In an example, for the preset vertical type, during model training , the newly acquired or received image containing the real data of the vertical type may be annotated in advance and is added into the training data for training. Therefore, the recognition efficiency and accuracy of the model may be improved.

In some examples, the method for training the image recognition model provided by the exemplary embodiment of the present disclosure may further include: acquire a newly received image for a preset vertical type, wherein the newly received image for the preset vertical type includes: a first image containing the real data of the preset vertical type, and the first image and the first training image have different formats; generate a second image containing the virtual data of the preset vertical type on the basis of the first image, wherein the second image and the first image have a same format; add the first image and the second image into the training data; and update the image recognition model on the basis of the training data to which the first image and the second image are added.

It may be understood that the image of the preset vertical type may have a plurality of formats, and the plurality of formats have the same data, for example, the same field and field value, but the positions of the fields are different. For example, for the train ticket image, it includes a red style of train ticket and a blue style of train ticket. In an example, by taking a case where the newly received image is the blue style of train ticket image as an example, the blue style of train ticket image includes real data, such as real passenger name, train number, seat number and other information. Due to the small amount of the blue style of train ticket data for training, a large amount of the blue style of train ticket images containing virtual data may be generated in advance. Then, the blue style of train ticket image containing the real data and the blue style of train ticket image containing the virtual data are added into the training data for training so as to update the image recognition model. Therefore, the generalized recognition rate of the model can be increased.

In some examples, in each training process, the number of model iterations may be specified in advance, for example, may be 25000 to 80000. The number of model iterations may be set according to the training requirement, which is not limited by the present disclosure. In some examples, the image recognition model obtained in the training process may be evaluated. For example, a model 1 obtained when the number of the iterations is 10000, a model 2 obtained when the number of the iterations is 20000, a model 3 obtained when the number of the iterations is 30000, and a model 4 obtained when the number of the iterations is 40000, may be evaluated by using an evaluation set, thereby selecting an optimal model with the optimal performance. For example, the model of which the precision and recall rate are greater than a preset threshold may be selected as the optimal model. For example, the evaluation set may include images which are annotated in advance and include the real data and/or the virtual data.

FIG. 4 shows a flowchart of an image recognition method 400 according to an embodiment of the present disclosure. As shown in FIG. 4, the image recognition method 400 may include a step 410 and a step 420. In the step 410, a target image to be recognized is acquired. In the step 420, the target image to be recognized is recognized on the basis of the image recognition model so as to extract text data of the target image to be recognized.

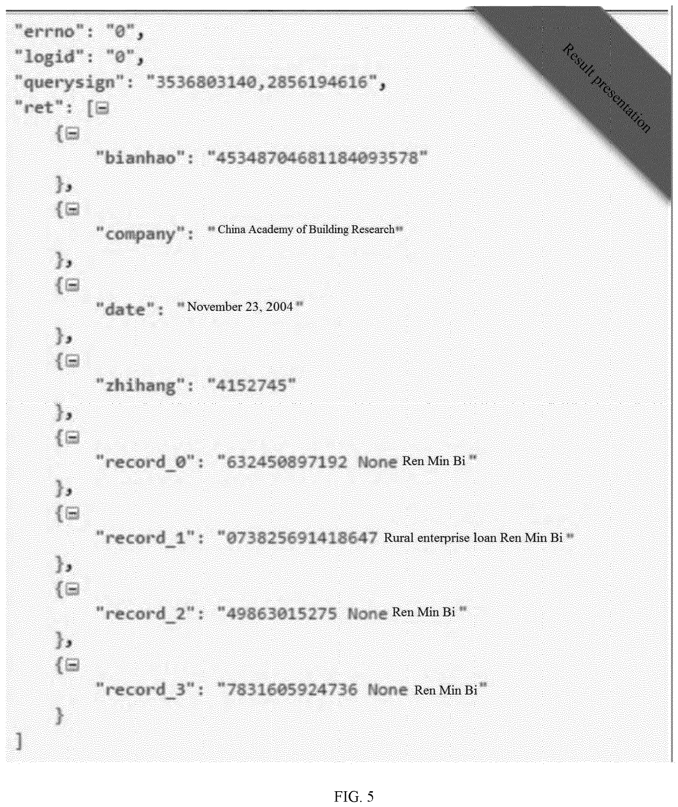

In an example, the image recognition model may be a model which is trained by the method for training the image recognition model provided by the exemplary embodiment of the present disclosure. The target image to be recognized may be an image from which a text or field is to be extracted, and may be any type of image, for example, a financial type of image, a card type of image, a bill type of image and the like. In some examples, the recognition result may be a json result, that is, a key-value json format. For example, as shown in FIG. 5, it shows a schematic diagram of an exemplary recognition result 500.

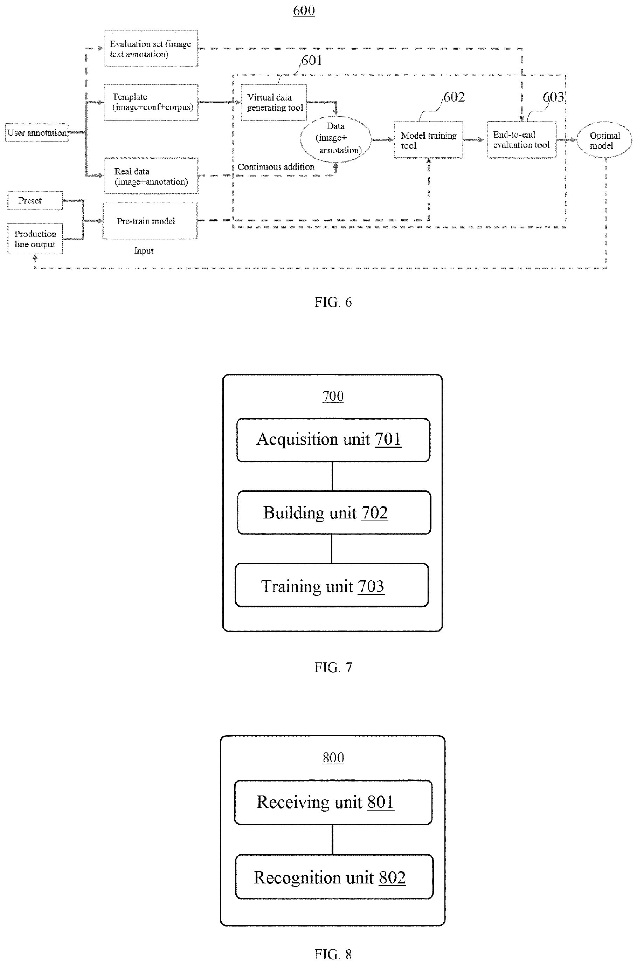

An embodiment of the present disclosure further provides a model training platform. FIG. 6 shows a schematic diagram of an exemplary training platform 600 according to an embodiment of the present disclosure. As shown in FIG. 6, the platform 600 may include a virtual data generating tool 601, a model training tool 602 and an end-to-end evaluation tool 603. The implementation process of the platform 600 may include the processes such as the data/model input, a production line execution, the model output and the like.

The virtual data generating tool 601 may be used to read template information and generate a large amount of virtual data. The model training tool 602 may be used to train models. In an example, an output parameter of the model may include: the size of an input image, a batch size, the number of field categories, the number of maximum iterations and the like. In the training process, real data may be continuously added for training. The end-to-end evaluation tool 603 may be used to read a series of models produced by the model training tool 602 and evaluate the optimal model for the final data prediction. A user may annotate a template and real data in advance, wherein both the template and the real data are images with annotations. In some examples, the template may also be provided with configuration information (conf) and corpus information, wherein the configuration information may be a storage path and other information of the template. In an example, a pre-train model may be a basic model.

FIG. 7 shows a schematic block diagram of a device 700 for training an image recognition model according to an embodiment of the present disclosure. As shown in FIG. 7, the device 700 includes an acquisition unit 701, a building unit 702 and a training unit 703.

The acquisition unit 701 is configured to acquire training data. The training data includes a training image for a preset vertical type, wherein the training image includes a first training image containing real data of a preset vertical type and a second training image containing virtual data of a preset vertical type of.

The building unit 702 is configured to build a basic model. The basic model includes a deep learning network, wherein the deep learning network is configured to recognize the training image so as to extract text data in the training image.

The training unit 703 is configured to train the basic model by using the training data so as to obtain the image recognition model.

It should be understood that each unit of the device 700 shown in FIG. 7 may correspond to each step in the method 200 described with reference to FIG. 2. Therefore, the operations, features and advantages described above for the method 200 are also suitable for the device 700 and the units included in the device, which will not be elaborated for the sake of brevity.

FIG. 8 shows a schematic block diagram of an image recognition device 800 according to an embodiment of the present disclosure. As shown in FIG. 8, the device 800 includes a receiving unit 801 and a recognition unit 802.

The receiving unit 801 is configured to receive a target image to be recognized.

The recognition unit 802 is configured to recognize the target image to be recognized on the basis of the image recognition model so as to extract text data in the target image to be recognized.

It should be understood that each unit of the device 800 shown in FIG. 8 may correspond to each step in the method 400 described with reference to FIG. 4. Therefore, the operations, features and advantages described above for the method 400 are also suitable for the device 800 and the units included in the device, which will not be elaborated for the sake of brevity.

Although specific functions are discussed above with reference to the specific unit, it should be noted that the functions of each unit discussed herein may be divided into a plurality units, and/or at least some functions of the plurality of units may be combined into a single unit. The execution action of the specific unit discussed herein includes: the specific unit itself executes the action, or alternatively, the specific unit calls or accesses another component or unit which executes the action (or executes the action in combination with the specific unit) in other ways. Therefore, the specific unit executing the action may include the specific unit itself which executes the action, and/or another unit which is called by the specific unit or accessed in other ways to execute the action.

Various technologies may be described herein in the general context of software hardware elements or program modules. Various units and sub-units described above may be implemented in hardware or in hardware combined with software and/or firmware. For example, these units and sub-units may be implemented as a computer program code/instruction, wherein the computer program code/instruction is configured to be executed in one or more processors and stored in a computer readable storage medium. Alternatively, these modules may be implemented as a hardware logic/circuit. For example, one or more of the units and the sub-units may be implemented in a system on a chip (SoC). The SoC may include an integrated circuit chip (including a processor (for example, a central processing unit (CPU), a microcontroller, a microprocessor, a digital signal processor (DSP) and the like), a memory, one or more communication interfaces, and/or one or more components in other circuits); moreover, the SoC may optionally execute the received program code and/or include embedded firmware to perform functions.

According to another aspect of the present disclosure, electronic equipment is provided. The electronic equipment includes: at least one processor; and a memory, in communication connection with the at least one processor. The memory stores an instruction executable by the at least one processor, wherein the instruction enables the at least one processor to perform the method provided by the embodiments of the present disclosure when being executed by the at least one processor.

According to another aspect of the present disclosure, a non-transitory computer readable storage medium storing a computer instruction is provided, wherein the computer instruction is configured to enable the computer to perform the method provided by the embodiments of the present disclosure.

According to another aspect of the present disclosure, a computer program product is provided. The computer program product includes a computer program, wherein when the computer program is executed by a processor, the method provided by the embodiments of the present disclosure is implemented.

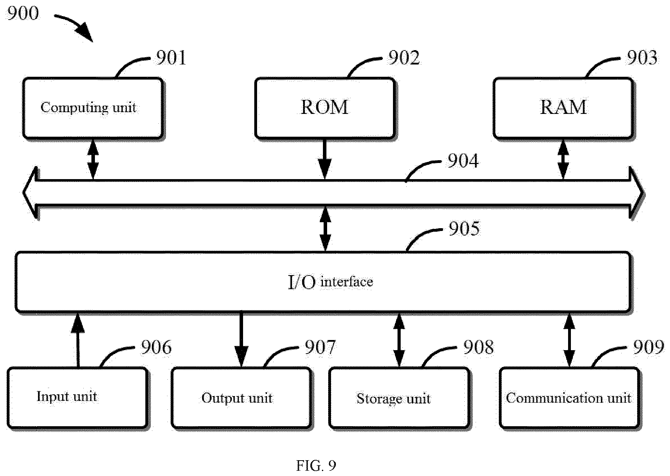

Hereinafter, the examples of such electronic equipment, non-transitory computer readable storage medium and computer program product are described with reference to FIG. 9. FIG. 9 shows a structural block diagram of exemplary electronic equipment 900 that can be used to implement an embodiment of the present disclosure.

Referring to FIG. 9, a structural block diagram of electronic equipment 900 which may serve as a server or a client side of the present disclosure will now be described, which is an example of hardware equipment capable of being applied to various aspects of the present disclosure. The electronic equipment is intended to represent various forms of digital electronic computer equipment, such as a laptop computer, a desk computer, a workbench, a personal digital assistant, a server, a blade server, a large-scale computer and other suitable computers. The electronic equipment may also represent various forms of mobile devices, such as personal digital processing, a cell phone, a smart phone, wearable equipment and other similar computing devices. Parts, connection and a relationship between the parts, and functions of the parts shown herein only serve as examples, and are not intended to limit the implementation of the present disclosure described and/or claimed herein.

As shown in FIG. 9, the equipment 900 includes a computing unit 901, which may execute various appropriate actions and processing according to a computer program stored in a read-only memory (ROM) 902 or a computer program loaded to a random access memory (RAM) 903 from a storage unit 908. Various programs and data required for operation of the equipment 900 may be stored in the RAM 903. The computer unit 901, the ROM 902 and the RAM 903 are connected mutually through a bus 904. An input/output (I/O) interface 905 is also connected to the bus 904.

A plurality of parts in the equipment 900 are connected to the I/O interface 905, including: an input unit 906, an output unit 907, a storage unit 908 and a communication unit 909. The input unit 906 may be any type of equipment capable of inputting information to the equipment 900; the input unit 906 may receive the input digital or character information and generate key signal input related to user setting and/or function control of the electronic equipment; moreover, the input unit 906 may include, but is not limited to, a mouse, a keyboard, a touch screen, a trackpad, a trackball, a joystick, a microphone and/or a remote controller. The output unit 907 may be any type of equipment capable of presenting information, and may include, but is not limited to, a display, a loudspeaker, a video/audio output terminal, a vibrator and/or a printer. The storage unit 908 may include, but is not limited to, a magnetic disk and an optical disk. The communication unit 909 allows the equipment 900 to exchange information/data with other equipment through a computer network such as the Internet and/or various telecommunication networks, and may include, but is not limited to, a modem, a network card, infrared communication equipment, wireless communication equipment and/or a chipset, for example, Bluetooth TM equipment, 1302.11 equipment, WiFi equipment, WiMax equipment, cellular communication equipment and/or an analogue.

The computing unit 901 may be various general-purpose and/or special-purpose processing components with processing and computing capabilities. Some examples of the computing unit 901 include, but are not limited to, a central processing unit (CPU), a graphics processing unit (GPU), various dedicated artificial intelligence (AI) computing chips, various computing units running machine learning model algorithms, a digital signal processor (DSP), and any appropriate processor, controller, microcontroller and the like. The computing unit 901 performs various methods and processes described above, for example, the methods 200 and 400. For example, in some embodiments, the methods 200 and 400 may be implemented as computer software programs, which are tangibly included into a machine readable medium, such as a storage unit 908. In some embodiments, part or all of the computer program may be loaded and/or installed on the equipment 900 through the ROM 902 and/or the communication unit 909. When the computer program is loaded to the RAM 903 and is executed by the computing unit 901, one or more steps of the methods 200 and 400 described above may be performed. Alternatively, in other embodiments, the computing unit 901 may be configured to perform the methods 200 and 400 through any other appropriate ways (for example, by virtue of firmware).

Various implementation manners of the system and technology described above herein may be implemented in a digital electronic circuit system, an integrated circuit system, a field programmable gate array (FPGA), an application specific integrated circuit (ASIC), an application specific standard product (ASSP), a system of a system on a chip (SOC), a complex programmable logic device (CPLD), computer hardware, firmware, software and/or a combination thereof. These various implementation manners may include: implementation in one or more computer programs, wherein the one or more computer programs may be executed and/or explained on a programmable system including at least one programmable processor; and the programmable processor may be a special-purpose or general-purpose programmable processor, and may receive data and an instruction from a memory system, at least one input device and at least one output device and transmit the data and the instruction into the memory system, the at least one input device and the at least one output device.

Program codes for implementing the method of the present disclosure may be written by any combination of one or more programming languages. These program codes may be provided to a processor or controller of a general-purpose computer, a special-purpose computer or other programmable data processing devices, so that the program codes enable the function/operation specified in the flowchart and/or the block diagram to be implemented when being executed by the processor or controller. The program codes may be completely executed on a machine, partially executed on a machine, partially executed on a machine and partially executed on a remote machine as an independent software package, or completely executed on a remote machine or a server.

In the context of the present disclosure, the machine readable medium may be a tangible medium, which may include or store a program for use by or in combination with an instruction executing system, device or equipment. The machine readable medium may be a machine readable signal medium or a machine readable storage medium. The machine readable medium may include, but is not limited to, an electronic, magnetic, optical, electromagnetic, infrared or semiconductor system, device or equipment, or any appropriate combination of the above. More specific examples of the machine readable storage medium may include one or more wires-based electrical connection, a portable computer disk, a hard disk, a random access memory (RAM), a read-only memory (ROM), an erasable programmable read-only memory (EPROM or a flash memory), an optical fiber, a portable compact disk read-only memory (CD-ROM), optical storage equipment, magnetic storage equipment, or any appropriate combination of the above.

To provide interaction with a user, the system and technology described herein may be implemented on a computer. The computer is provided with: a display device (for example, a cathode-ray tube (CRT) or a liquid crystal display (LCD) monitor) for displaying information to the user; and a keyboard and a pointing device (for example, a mouse or a trackball), wherein the user may provide input to the computer through the keyboard and the pointing device. Other types of devices may further be configured to provide interaction with the user; for example, feedback provided to the user may be sensing feedback in any forms (such as visual feedback, auditory feedback or tactile feedback); moreover, the input from the user may be received in any forms (including sound input, voice input or touch input).

The system and technology described herein may be implemented in a computing system including a background part (for example, as a data server), or a computing system including a middleware part (for example, an application server), or a computing system including a front end part (for example, a user computer with a graphical user interface or a network browser, wherein the user may interact with the implementation manner of the system and technology described herein through the graphical user interface or the network browser), or a computing system including any combination of the background part, the middleware part or the front end part. Parts of the system may be connected to each other through digital data communication (such as a communication network) in any forms or mediums. An example of the communication network includes: a local area network (LAN), a wide area network (WAN) and Internet.

The computer system may include a client side and a server. The client side and the server are generally far away from each other and generally interact through the communication network. A relationship between the client side and the server is generated through computer programs which operate on the corresponding computer and mutually have a client side-server relationship.

It should be understood that steps may be reordered, increased or deleted by using various forms of processes shown above. For example, various steps recorded in the present disclosure may be performed concurrently or sequentially or in different orders, as long as the expected result of the technical solutions disclosed by the present disclosure can be realized, and there is no limitation herein.

Although the embodiments or examples of the present disclosure have been described with reference to the accompanying drawings, it should be understood that the the invention is not limited to the disclosed exemplary embodiments, but by the scope of the following claims.

## Claims

1. A computer-implemented method for training an image recognition model, comprising:
acquiring (210) training data, wherein the training data includes training images for a preset vertical type, and the training images include a first training image containing real data of the preset vertical type and a second training image containing virtual data of the preset vertical type, wherein the preset vertical type comprises one or more of a financial type, a card type and a bill type;
building (220) a basic model, wherein the basic model includes a deep learning network, and the deep learning network is configured to extract text data from the training images by performing image recognition;
training (230) the basic model into the image recognition model by using the training data; **characterised by**
acquiring a newly received image for the preset vertical type, wherein the newly received image for the preset vertical type comprises: a first image containing real data of the preset vertical type, and the first image and the first training image have different formats, wherein the formats comprise positions of fields;
generating a second image containing virtual data of the preset vertical type based on the first image, wherein the second image and the first image have a same format;
adding the first image and the second image into the training data; and
updating the image recognition model based on the training data to which the first image and the second image are added.

2. The method according to claim 1, wherein the second training image is generated based on the first training image,
wherein the method further comprises:
acquiring a first template image containing the real data of the preset vertical type,
erasing field values of a plurality of fields to-be-extracted in the first template image to obtain a second template image, and
performing corpus filling on the erased field values of the plurality of fields to-be-extracted in the second template image, to obtain the second training image containing the virtual data of the preset vertical type, wherein the corpus filling comprises filling corresponding text to the erased field values as field values.

3. The method according to any one of claims 1-2, wherein training the basic model by using the training data to obtain the image recognition model comprises:
inputting the training data into the basic model in batches according to a preset parameter;
determining, according to an error function of the basic model, an error between the text data in the training images extracted by the deep learning network and real text data corresponding to the training images; and
performing back-propagation training on the deep learning network based on the error to obtain the image recognition model.

4. The method according to any one of claims 1-3, further comprising:
acquiring a newly received image for the preset vertical type, wherein the newly received image includes: a first image containing real data of the preset vertical type, and the first image and the first training image has a same format;
adding the first image into the training data; and
updating the image recognition model based on the training data to which the first image is added.

5. The method according to any one of claims 1-4, wherein an intermediate image recognition model is generated from the basic model in a process of training the basic model by using the training data, the intermediate image recognition model being further trained into the image recognition model.

6. The method according to any one of claims 1-5, wherein the first training image and the second training image include fields to be extracted that have been identified in advance.

7. An image recognition method, comprising:
acquiring (410) a target image to be recognized; and
recognizing (420) the target image based on the image recognition model obtained by the method according to claim 1 so as to extract text data in the target image.

8. A device for training an image recognition model, comprising:
an acquisition unit (701), configured to acquire training data, wherein the training data includes training images for a preset vertical type, and the training images include a first training image containing real data of the preset vertical type and a second training image containing virtual data of the preset vertical type, wherein the preset vertical type comprises one or more of a financial type, a card type and a bill type;
a building unit (702), configured to build a basic model, wherein the basic model includes a deep learning network, and the deep learning network is configured to extract text data from the training images by performing image recognition;
a training unit (703), configured to train the basic model into the image recognition model by using the training data the image recognition model; **characterised by**
a unit for acquiring a newly received image for the preset vertical type, wherein the newly received image for the preset vertical type comprises: a first image containing real data of the preset vertical type, and the first image and the first training image have different formats, wherein the formats comprise positions of fields;
a unit for generating a second image containing virtual data of the preset vertical type based on the first image, wherein the second image and the first image have a same format;
a unit for adding the first image and the second image into the training data; and
a unit for updating the image recognition model based on the training data to which the first image and the second image are added.

9. The device according to claim 8, wherein the second training image is generated on the basis of the first training image,
wherein the device further comprises:
a unit for acquiring a first template image containing real data of the preset vertical type,
a unit for erasing field values of a plurality of fields to-be-extracted in the first template image to obtain a second template image, and
a unit for performing corpus filling on the erased field values of the plurality of fields to-be-extracted in the second template image to obtain the second training image containing virtual data of the preset vertical type, wherein the corpus filling comprises filling corresponding text to the erased field values as field values.

10. The device according to any one of claims 8-9, wherein the training unit comprises:
a unit for inputting the training data into the basic model in batches according to a preset parameter;
a unit for determining, according to an error function of the basic model, an error between text data in the training image extracted by the deep learning network and real text data corresponding to the training images; and
a unit for performing back-propagation training on the deep learning network based on the error to obtain the image recognition model.

11. An image recognition device, comprising:
a receiving unit (801), configured to receive a target image to be recognized; and
a recognition unit (802), configured to recognize the target image based on the image recognition model obtained by the method according to any of claims 1 to 6 so as to extract text data in the target image.

12. A non-transitory computer readable storage medium storing a computer instruction, wherein the computer instruction is configured to enable a computer to perform the method according to any one of claims 1-6 or the method according to claim 7.

13. A computer program product comprising program code portions for performing the method of any one of claims 1 to 6 or the method of claim 7 when the computer program product is executed on one or more computing devices.

## Patentansprüche

1. Computerimplementiertes Verfahren zum Trainieren eines Bilderkennungsmodells, das aufweist:
Erfassen (210) von Trainingsdaten, wobei die Trainingsdaten Trainingsbilder für einen voreingestellten vertikalen Typ beinhalten und die Trainingsbilder ein erstes Trainingsbild, das reale Daten des voreingestellten vertikalen Typs enthält, und ein zweites Trainingsbild, das virtuelle Daten des voreingestellten vertikalen Typs enthält, umfassen, wobei der voreingestellte vertikale Typ einen oder mehr von einem finanziellen Typ, einem Kartentyp und einem Rechnungstyp aufweist;
Aufbauen (220) eines Grundmodells, wobei das Grundmodell ein Netzwerk für tiefes Lernen beinhaltet und das Netzwerk für tiefes Lernen zum Extrahieren von Textdaten aus den Trainingsbildern durch Durchführen von Bilderkennung konfiguriert ist;
Trainieren (230) des Grundmodells mithilfe der Trainingsdaten auf das Bilderkennungsmodell;
**gekennzeichnet durch**
Erfassen eines neu empfangenen Bilds für den voreingestellten vertikalen Typ, wobei das neu empfangene Bild für den voreingestellten vertikalen Typ aufweist: ein erstes Bild, das reale Daten des voreingestellten vertikalen Typs enthält, und wobei das erste Bild und das erste Trainingsbild verschiedene Formate haben, wobei die Formate Feldpositionen aufweisen;
Generieren eines zweiten Bilds, das virtuelle Daten des voreingestellten vertikalen Typs enthält, auf Basis des ersten Bilds, wobei das zweite Bild und das erste Bild das gleiche Format haben;
Hinzufügen des ersten Bilds und des zweiten Bilds zu den Trainingsdaten, und
Aktualisieren des Bilderkennungsmodells auf Basis der Trainingsdaten, zu denen das erste Bild und das zweite Bild hinzugefügt werden.

2. Verfahren nach Anspruch 1, wobei das zweite Trainingsbild auf Basis des ersten Trainingsbilds generiert wird,
wobei das Verfahren ferner aufweist:
Erfassen eines ersten Vorlagenbilds, das die realen Daten des voreingestellten vertikalen Typs enthält,
Löschen von Feldwerten einer Vielzahl von zu extrahierenden Feldern in dem ersten Vorlagenbild, um ein zweites Vorlagenbild zu erhalten, und
Durchführen einer Korpusfüllung an den gelöschten Feldwerten der Vielzahl von zu extrahierenden Feldern in dem zweiten Vorlagenbild, um das zweite Trainingsbild zu erhalten, das die virtuellen Daten des voreingestellten vertikalen Typs enthält, wobei die Korpusfüllung das Einfüllen von entsprechendem Text auf die gelöschten Werte als Feldwerte aufweist.

3. Verfahren nach einem der Ansprüche 1 bis 2, wobei Trainieren des Grundmodells mithilfe der Trainingsdaten zum Erhalten des Bilderkennungsmodells aufweist:
stapelweises Eingeben der Trainingsdaten in das Grundmodell gemäß einem voreingestellten Parameter;
Bestimmen, gemäß einer Fehlerfunktion des Grundmodells, eines Fehlers zwischen den Textdaten in den Trainingsbildern, die durch das Netzwerk für tiefes Lernen extrahiert werden, und realen Textdaten, die den Trainingsbildern entsprechen; und
Durchführen von Fehlerrückführungstraining am Netzwerk für tiefes Lernen auf Basis des Fehlers, um das Bilderkennungsmodell zu erhalten.

4. Verfahren nach einem der Ansprüche 1 bis 3, das ferner aufweist:
Erfassen eines neu empfangenen Bilds für den voreingestellten vertikalen Typ, wobei das neu empfangene Bild umfasst: ein erstes Bild, das reale Daten des voreingestellten vertikalen Typs enthält, und wobei das erste Bild und das erste Trainingsbild das gleiche Format haben;
Hinzufügen des ersten Bilds zu den Trainingsdaten, und
Aktualisieren des Bilderkennungsmodells auf Basis der Trainingsdaten, zu denen das ersten Bild hinzugefügt wird.

5. Verfahren nach einem der Ansprüche 1 bis 4, wobei ein Bilderkennungszwischenmodell anhand des Grundmodells in einem Trainingsprozess des Grundmodells mithilfe der Trainingsdaten generiert wird, wobei das Bilderkennungszwischenmodell ferner auf das Bilderkennungsmodell trainiert wird.

6. Verfahren nach einem der Ansprüche 1 bis 5, wobei das erste Trainingsbild und das zweite Trainingsbild zu extrahierende Felder beinhaltet, die im Voraus bestimmt wurden.

7. Bilderkennungsverfahren, das aufweist:
Erfassen (410) eines zu erkennenden Zielbilds; und
Erkennen (420) des Zielbilds auf Basis des Bilderkennungsmodells, das durch das Verfahren nach Anspruch 1 erhalten wurde, um Textdaten in dem Zielbild zu extrahieren.

8. Vorrichtung zum Trainieren eines Bilderkennungsmodells, die aufweist:
eine Erfassungseinheit (701), die zum Erfassen von Trainingsdaten konfiguriert ist, wobei die Trainingsdaten Trainingsbilder für einen voreingestellten vertikalen Typ beinhalten und die Trainingsbilder ein erstes Trainingsbild, das reale Daten des voreingestellten vertikalen Typs enthält, und ein zweites Trainingsbild, das virtuelle Daten des voreingestellten vertikalen Typs enthält, umfassen, wobei der voreingestellte vertikale Typ einen oder mehr von einem finanziellen Typ, einem Kartentyp und einem Rechnungstyp aufweist;
eine Aufbaueinheit (702), die zum Aufbauen eines Grundmodells konfiguriert ist, wobei das Grundmodell ein Netzwerk für tiefes Lernen beinhaltet und das Netzwerk für tiefes Lernen zum Extrahieren von Textdaten aus den Trainingsbildern durch Durchführen von Bilderkennung konfiguriert ist;
eine Trainingseinheit (703), die zum Trainieren des Grundmodells mithilfe der Trainingsdaten das Bilderkennungsmodell auf das Bilderkennungsmodell konfiguriert ist;
eine Einheit zum eines neu empfangenen Bilds für den voreingestellten vertikalen Typ, wobei das neu empfangene Bild für den voreingestellten vertikalen Typ aufweist: ein erstes Bild, das reale Daten des voreingestellten vertikalen Typs enthält, und wobei das erste Bild und das erste Trainingsbild verschiedene Formate haben, wobei die Formate Feldpositionen aufweisen;
eine Einheit zum Generieren eines zweiten Bilds, das virtuelle Daten des voreingestellten vertikalen Typs enthält, auf Basis des ersten Bilds, wobei das zweite Bild und das erste Bild das gleiche Format haben;
eine Einheit zum Hinzufügen des ersten Bilds und des zweiten Bilds zu den Trainingsdaten, und
eine Einheit zum Aktualisieren des Bilderkennungsmodells auf Basis der Trainingsdaten, zu denen das erste Bild und das zweite Bild hinzugefügt werden.

9. Vorrichtung nach Anspruch 8, wobei das zweite Trainingsbild auf Basis des ersten Trainingsbilds generiert wird,
wobei die Vorrichtung ferner aufweist:
eine Einheit zum Erfassen eines ersten Vorlagenbilds, das reale Daten des voreingestellten vertikalen Typs enthält,
eine Einheit zum Löschen von Feldwerten einer Vielzahl von zu extrahierenden Feldern in dem ersten Vorlagenbild, um ein zweites Vorlagenbild zu erhalten, und
eine Einheit zum Durchführen einer Korpusfüllung an den gelöschten Feldwerten der Vielzahl von zu extrahierenden Feldern in dem zweiten Vorlagenbild, um das zweite Trainingsbild zu erhalten, das die virtuellen Daten des voreingestellten vertikalen Typs enthält, wobei die Korpusfüllung das Einfüllen von entsprechendem Text auf die gelöschten Feldwerte als Feldwerte aufweist.

10. Vorrichtung nach einem der Ansprüche 8 bis 9, wobei die Trainingseinheit aufweist:
eine Einheit zum stapelweisen Eingeben der Trainingsdaten in das Grundmodell gemäß einem voreingestellten Parameter;
eine Einheit zum Bestimmen, gemäß einer Fehlerfunktion des Grundmodells, eines Fehlers zwischen Textdaten in dem durch das Netzwerk für tiefes Lernen extrahierten Trainingsbild und den Trainingsbildern entsprechenden realen Textdaten, und
eine Einheit zum Durchführen von Fehlerrückführungstraining am Netzwerk für tiefes Lernen auf Basis des Fehlers, um das Bilderkennungsmodell zu erhalten.

11. Bilderkennungsvorrichtung, die aufweist:
eine Empfangseinheit (801), die zum Empfangen eines zu erkennenden Zielbilds konfiguriert ist; und
eine Erkennungseinheit (802), die zum Erkennen des Zielbilds auf Basis des Bilderkennungsmodells, das durch das Verfahren nach einem der Ansprüche 1 bis 6 erhalten wurde, um Textdaten in dem Zielbild zu extrahieren.

12. Nichtflüchtiges computerlesbares Speichermedium, das eine Computeranweisung speichert, wobei die Computeranweisung konfiguriert ist, um einem Computer das Durchführen des Verfahrens nach einem der Ansprüche 1 bis 6 oder des Verfahrens nach Anspruch 7 zu ermöglichen.

13. Computerprogrammprodukt, das Programmcodeteile zum Durchführen des Verfahrens nach einem der Ansprüche 1 bis 6 oder des Verfahrens nach Anspruch 7, wenn das Computerprogrammprodukt auf ein oder mehr Rechenvorrichtungen abgearbeitet wird, aufweist.

## Revendications

1. Procédé mis en oeuvre par ordinateur d'entraînement d'un modèle de reconnaissance d'images, comprenant :
l'acquisition (210) de données d'entraînement, dans lequel les données d'entraînement comportent des images d'entraînement pour un type vertical prédéfini, et les images d'entraînement comportent une première image d'entraînement contenant des données réelles du type vertical prédéfini et une deuxième image d'entraînement contenant des données virtuelles du type vertical prédéfini, dans lequel le type vertical prédéfini comprend un ou plusieurs parmi un type financier, un type de carte et un type de billet ;
l'élaboration (220) d'un modèle de base, dans lequel le mode de base comporte un réseau d'apprentissage profond, et le réseau d'apprentissage profond est configuré pour extraire des données de texte des images d'entraînement en réalisation une reconnaissance d'images ;
l'entraînement (230) du modèle de base dans le modèle de reconnaissance d'images en utilisant les données d'entraînement ;
**caractérisé par**
l'acquisition d'une image récemment reçue pour le type vertical prédéfini, dans lequel l'image récemment reçue pour le type vertical prédéfini comprend : une première image contenant des données réelles du type vertical prédéfini, et la première image et la première image d'entraînement présentent des formats différents, dans lequel les formats comprennent des positions de champs ;
la génération d'une deuxième image contenant des données virtuelles du type vertical prédéfini sur la base de la première image, dans lequel la deuxième image et la première image présentent un format identique ;
l'ajout de la première image et de la deuxième image dans les données d'entraînement ; et
la mise à jour du modèle de reconnaissance d'images sur la base des données d'entraînement auxquelles la première image et la deuxième image sont ajoutées.

2. Procédé selon la revendication 1, dans lequel la deuxième image d'entraînement est générée sur la base de la première image d'entraînement,
dans lequel le procédé comprend en outre :
l'acquisition d'une première image de modèle contenant les données réelles du type vertical prédéfini,
la suppression de valeurs de champ d'une pluralité de champs à extraire dans la première image de modèle pour obtenir une deuxième image de modèle, et
la réalisation d'une insertion de corps sur les valeurs de champ supprimées de la pluralité de champs à extraire dans la deuxième image de modèle pour obtenir la deuxième image d'entraînement contenant les données virtuelles du type vertical prédéfini, dans lequel l'insertion de corps comprend l'insertion de texte correspondant dans les valeurs de champ supprimées en tant que valeurs de champ.

3. Procédé selon l'une quelconque des revendications 1 - 2, dans lequel l'entraînement du modèle de base en utilisant les données d'entraînement pour obtenir le modèle de reconnaissance d'images comprend :
l'entrée des données d'entraînement dans le modèle de base en des lots selon un paramètre prédéfini ;
la détermination, selon une fonction d'erreur du modèle de base, d'une erreur entre les données de texte dans les images d'entraînement extraites par le réseau d'apprentissage profond et les données de texte réelles correspondant aux images d'entraînement ; et
la réalisation d'un entraînement de rétropropagation sur le réseau d'apprentissage profond sur la base de l'erreur pour obtenir le modèle de reconnaissance d'images.

4. Procédé selon l'une quelconque des revendications 1-3, comprenant en outre :
l'acquisition d'une image récemment reçue pour le type vertical prédéfini, dans lequel l'image récemment reçue comporte :
une première image contenant des données réelles du type vertical prédéfini, et la première image et la première image d'entraînement présentent un format identique ;
l'ajout de la première image dans les données d'entraînement ; et
la mise à jour du modèle de reconnaissance d'images sur la base des données d'entraînement auxquelles la première image est ajoutée.

5. Procédé selon l'une quelconque des revendications 1 - 4, dans lequel un modèle de reconnaissance d'images intermédiaire est généré depuis le modèle de base dans un processus d'entraînement du modèle de base en utilisant les données d'entraînement, le modèle de reconnaissance d'images intermédiaire étant en outre entraîné dans le modèle de reconnaissance d'images.

6. Procédé selon l'une quelconque des revendications 1-5, dans lequel la première image d'entraînement et la deuxième image d'entraînement comportent des champs à extraire qui ont été identifiés à l'avance.

7. Procédé de reconnaissance d'images, comprenant :
l'acquisition (410) d'une image cible devant être reconnue ; et
la reconnaissance (420) de l'image cible sur la base du modèle de reconnaissance d'images obtenu par le procédé selon la revendication 1 de manière à extraire des données de texte dans l'image cible.

8. Dispositif d'entraînement d'un modèle de reconnaissance d'images, comprenant :
une unité d'acquisition (701) configurée pour acquérir des données d'entraînement, dans lequel les données d'entraînement comportent des images d'entraînement pour un type vertical prédéfini, et les images d'entraînement comportent une première image d'entraînement contenant des données réelles du type vertical prédéfini et une deuxième image d'entraînement contenant des données virtuelles du type vertical prédéfini, dans lequel le type vertical prédéfini comprend un ou plusieurs parmi un type financier, un type de carte, et un type de billet ;
une unité d'élaboration (702) configurée pour élaborer un modèle de base, dans lequel le modèle de base comporte un réseau d'apprentissage profond, et le réseau d'apprentissage profond est configuré pour extraire des données de texte des images d'entraînement en réalisant une reconnaissance d'images ;
une unité d'entraînement (703) configurée pour entraîner le modèle de base dans le modèle de reconnaissance d'images en utilisant les données d'entraînement pour obtenir le modèle de reconnaissance d'images ; **caractérisé par**
une unité d'acquisition d'une image récemment reçue pour le type vertical prédéfini, dans lequel l'image récemment reçue pour le type vertical prédéfini comprend : une première image contenant des données réelles du type vertical prédéfini, et la première image et la première image d'entraînement présentent des formats différents, dans lequel les formats comprennent des positions de champs ;
une unité de génération d'une deuxième image contenant des données virtuelles du type vertical prédéfini sur la base de la première image, dans lequel la deuxième image et la première image présentent un format identique ;
une unité pour l'ajout de la première image et de la deuxième image dans les données d'entraînement ; et
une unité de mise à jour du modèle de reconnaissance d'images sur la base des données d'entraînement auxquelles la première image et la deuxième image sont ajoutées.

9. Dispositif selon la revendication 8, dans lequel la deuxième image d'entraînement est générée sur la base de la première image d'entraînement,
dans lequel le dispositif comprend en outre :
une unité d'acquisition d'une première image de modèle contenant des données réelles du type vertical prédéfini,
une unité de suppression de valeurs de champ d'une pluralité de champs à extraire dans la première image de modèle pour obtenir une deuxième image de modèle, et
une unité de réalisation d'insertion de corps sur les valeurs de champ supprimées de la pluralité de champs à extraire dans la deuxième image de modèle pour obtenir la deuxième image d'entraînement contenant des données virtuelles du type vertical prédéfini, dans lequel l'insertion de corps comprend l'insertion de texte correspondant dans des valeurs de champ supprimées en tant que valeurs de champ.

10. Dispositif selon l'une quelconque des revendications 8 - 9, dans lequel l'unité d'entraînement comprend :
une unité d'entrée des données d'entraînement dans le modèle de base en des lots selon un paramètre prédéfini ;
une unité de détermination, selon une fonction d'erreur du modèle de base, d'une erreur entre des données de texte dans l'image d'entraînement extraites par le réseau d'apprentissage profond et des données de texte réelles correspondant aux images d'entraînement ; et
une unité de réalisation d'entraînement de rétropropagation sur le réseau d'apprentissage profond sur la base de l'erreur pour obtenir le modèle de reconnaissance d'images.

11. Dispositif de reconnaissance d'images comprenant :
une unité de réception (801) configurée pour recevoir une image cible devant être reconnue ; et
une unité de reconnaissance (802) configurée pour reconnaître l'image cible sur la base du modèle de reconnaissance d'images obtenu par le procédé selon l'une quelconque des revendications 1 à 6 de manière à extraire des données de texte dans l'image cible.

12. Support de stockage lisible par ordinateur non transitoire stockant des instructions d'ordinateur, dans lequel les instructions d'ordinateur sont configurées pour permettre à un ordinateur de réaliser le procédé selon l'une quelconque des revendications 1 - 6 ou le procédé selon la revendication 7.

13. Produit de programme informatique comprenant des parties de code de programme pour réaliser le procédé selon l'une quelconque des revendications 1 à 6 ou le procédé selon la revendication 7 lorsque le produit de programme informatique est exécuté sur un ou plusieurs dispositifs informatiques.
